# EUROPÄISCHE PATENTSCHRIFT

(11) **EP 3 208 953 B1**
(45) Veröffentlichungstag und Bekanntmachung des Hinweises auf die Patenterteilung: **11.09.2019**
(21) Anmeldenummer: 17150252.9
(22) Anmeldetag: 04.01.2017
(51) Int. Cl.: H04B 10/116

(54) **ANORDNUNG ZUR DRAHTLOSEN DATENÜBERTRAGUNG IN EINEM HAUS- ODER GEBÄUDEINSTALLATIONSSYSTEM**
ARRANGEMENT FOR WIRELESS DATA TRANSFER IN A HOUSE OR BUILDING INSTALLATION SYSTEM
SYSTÈME DE TRANSMISSION DE DONNÉES SANS FIL DANS UN SYSTÈME D'INSTALLATION DE BÂTIMENT OU DE MAISON

(30) Priorität: 18.02.2016 DE 102016102858
(43) Veröffentlichungstag der Anmeldung: 23.08.2017
(73) Patentinhaber: ABB Schweiz AG, 5400 Baden (CH)
(72) Erfinder: Gülfirat, Tuncay, 73734 Esslingen (DE); John, Dirk, 76199 Karlsruhe (DE); Cathomen, Retus, 8048 Zürich (CH); Lehnert, Christian, 58239 Schwerte (DE)

(56) Entgegenhaltungen:
- DE-A1-102009 041 623
- US-A1- 2006 056 855
- US-A1- 2014 286 645
- US-A1- 2015 263 808

## Beschreibung

Die Erfindung betrifft eine Anordnung zur Datenübertragung in einem Haus- oder Gebäudeinstallationssystem basierend auf einer drahtlosen Kommunikation mittels sichtbaren Lichts (VL = Visible Light), nachfolgend auch optische Datenübertragung genannt, gemäß den Merkmalen des Anspruches 1.

Gebäude- oder Hausinstallationssysteme nutzen vielfältige Kommunikationsstrukturen zur drahtlosen Ansteuerung der im Gebäude eingesetzten Installationsgeräte und zum Datenaustausch mit einer zentralen Kommunikationseinheit, wobei die zentralen Kommunikationseinheit neben der Kommunikation mit den Installationsgeräten des Haus- oder Gebäudeautomatisierungssystems auch Verarbeitungs- und/oder Steuerungsfunktionen ausführt. Die zentrale Kommunikationseinheit, auch als zentrale Verarbeitungseinheit oder Zentraleinheit bekannt, nutzt beispielsweise zur drahtlosen oder funkbasierten Datenübertragung mit den Installationsgeräten bekannte Infrarot- Bluetooth- oder NFC- Übertragungstechniken.

Zu den drahtlos kommunizierenden Installationsgeräten zählen beispielsweise Steckdosen, Schalter, Taster und Dimmer, Rauchmelder, Bewegungsmelder als auch Gebäudeautomatisierungsgeräte mit Bedieneinheiten für Sonnenschutzvorrichtungen, Heizung- und Klimaanlagen, Türkommunikationsanlagen und Sicherheitsanlagen.

Aus der US 20150263808 A1, US2006056855 A1, US20140286645 A1 und DE102009041623 A1 sind Lichtkommunikationssystem für Beleuchtungsvorrichtungen bekannt.

Probleme der funkbasierten Übertragungssysteme beruhen auf einer hohen Dichte der räumlichen Anordnung von HF-Sende- und Empfangsmodulen, welche zu gegenseitigen Störungen führen können und oft Probleme bezüglich der Sicherheit der übertragenen Daten bedingen.

Auch ist die Ausstattung der fernbedienbaren Installationsgeräte mit zusätzlichen Sendeeinheiten mit nicht unerheblichen Kosten verbunden.

Aufgabe der Erfindung ist es, eine Anordnung zur Datenübertragung in einem Haus- oder Gebäudeinstallationssystem basierend auf einer drahtlosen Kommunikation zu schaffen, deren Installation ein einfacher Weise ausführbar ist, und wodurch vorgenannte Nachteile des Standes der Technik überwunden werden.

Diese Aufgabe wird erfindungsgemäß durch eine Anordnung zur drahtlosen Datenübertragung in einem Haus- oder Gebäudeinstallationssystem mit wenigstens einem als Unterputz- oder Aufputzgerät ausgeführtem Installationsgerät, basierend auf einer drahtlosen Kommunikation mittels sichtbaren Lichts, gelöst.

Erfindungsgemäß ist das wenigstens eine Installationsgerät mit wenigstens einer als optische Sendeeinheit wirkenden Lichtquelle ausgestattet ist, die mit wenigstens einer im Abstand zur Sendeeinheit des Installationsgerätes angeordneten optischen Empfängereinheit mittels den von der Sendeeinheit ausgesendetem Lichtstrahlen drahtlos kommuniziert. Dabei ist Lichtquelle so modifiziert, dass eine Datenübertragung über die von der Lichtquelle des Installationsgerätes abgegebenen sichtbaren Lichtstrahlen ausführbar ist.

Vorteilhafte Ausgestaltungen, Verbesserungen der erfindungsgemäßen Anordnung sind in weiteren Ansprüchen und in der Beschreibung angegeben.

Erfindungsgemäß ist die optische Sendeeinheit des Installationsgerätes vorzugsweise als LED (light-emitting diode) ausgeführt, wobei die wenigstens eine Empfängereinheit so ausgeführt ist, dass sie die von der LED ausgesendeten Lichtstrahlen, nachfolgend auch als optische Signale bezeichnet, zur drahtlosen optischen Datenübertragung empfängt.

Die Empfängereinheit ist vorzugsweise als ein VLC (Visible Light Communication) Receiver oder ein mobiles Gerät mit integrierter Empfängereinheit für optische Signale ausgeführt.

Die in der Anordnung verwendeten Installationsgeräte können beispielsweise Steckdosen, Schalter, Taster, Dimmer, Rauchmelder, Bewegungsmelder und/oder Gebäudeautomatisierungsgeräte mit Bedieneinheiten für Sonnenschutzvorrichtungen, Türkommunikationsanlagen, Sicherheitsanlagen sowie Heizungs- und Klimaanlagen sein, die mit einer als Lichtquelle wirkenden Sendeeinheit ausgestattet sind.

Erfindungsgemäß ist vorgesehen, dass die von der Empfängereinheit empfangenen Signale weiter zu einer entfernten zentralen Kommunikationseinheit oder Zentrale, welche mit einer Einheit zum Empfang der von der Empfängereinheit ausgesendeten Signale ausgeführt ist, weiterzuleiten. Dazu ist die zentrale Kommunikationseinheit mit einer als Backend-System arbeitenden Datenbank ausgestattet. Der Datenaustausch ist dabei mit den bekannten Übertragungstechnologien, LTE, Wi-Fi oder Bluetooth ausführbar.

Sind die Geräte nach ihrer Installation im Haus- oder Gebäudeinstallationssystem aktiviert, also ihre Lichtquellen eingeschaltet, werden über das mobile Gerät beispielsweise eine Identifikationskennzeichnung eines Gerätes, welches sich im Sichtbereich des mobilen Gerätes befindet zum mobilen Gerät mittels der sichtbaren Lichtstrahlen übertragen. Das mobile Gerät übermittelt, wie vorab beschrieben die Identifikationskennzeichnung des Gerätes in die Datenbank. Die Identifikationskennzeichnung des Gerätes wird mit vorab in der Datenbank gespeicherten Geräteinformationen verknüpft.

Beispielsweise überträgt die LED einer Steckdose mittels der von ihr abgestrahlten sichtbaren Lichtstrahlen ihre Identifizierungsnummer zum mobilen Gerät. Das mobile Gerät verbindet sich mit dem Backend-System, z.B. über eine LTE oder Wi-Fi- Verbindung und fragt die Geräteinformation für diese ID ab.

Das kann mit einem Registrierungsmechanismus erfolgen, wodurch nicht nur eine Identifikation der Geräte über ihre individuelle Identifizierungsnummer ausführbar ist sondern die individuelle Identifizierungsnummer auch als Schlüssel verwendbar ist, um die entsprechende Information von der Backend-Datenbank oder der Cloud zu erhalten.

Die Kommunikation bzw. der Datenaustausch zwischen den Sende- und Empfangseinheiten des mobilen Gerätes und den Installationsgeräten der erfindungsgemäßen Anordnung erfolgt mittels sichtbaren Lichtstrahlen, vorzugsweise im Bereich von 780 nm bis 375 nm.

Für dieses auch als über VLC (Visual Light Communication) bekannte Datenübertragungsverfahren sind die Sende- und Empfangseinheiten so modifiziert, dass sie für die optische Datenübertragung sichtbare Lichtstrahlen aussenden und/oder empfangen. An den Empfängereinheiten ist jeweils wenigstens ein Lichtsensor, auch als optischer Detektor oder optoelektronischer Sensor bekannt, angebracht, welcher die empfangenen Lichtstrahlen wieder in Stromimpulse entsprechend der übertragenen Daten umwandelt.

Die auf der Visual Light Communication beruhenden Kommunikationstechniken sind beispielsweise in der US 2005/0265731 beschrieben und beruhen darauf, dass beispielsweise mittels des Detektors für sichtbares Licht, ein Lichtsignal in ein elektrisches Signal bzw. in entsprechende digitale Daten umwandelt und zur weiteren Verarbeitung bereitstellt.

Auch eine Kamera, beispielsweise eines Smartphones, zur Bildverarbeitung kann als Empfängereinheit vorgesehen sein, wobei diese die von der Sendeeinheit abgegebenen oder ausgesendeten sichtbare Lichtstrahlen empfängt und weiterverarbeitet, indem ein Bildverarbeitungsalgorithmus die empfangenen sichtbaren Lichtstrahlen dekodiert und die erhaltene Information visualisiert.

Zur Ausführung der optischen Datenübertragung zwischen dem als Unterputz- oder Aufputzgerät ausgeführtem Installationsgerät und der Empfängereinheit können auch bereits am Installationsgerät vorhandene Lichtquellen genutzt werden, zu denen beispielsweise Beleuchtungseinsätze in Schaltern zählen. Somit sind keine zusätzlichen Bauteile notwendig.

Die als Lichtquellen genutzten bereits an den Installationsgeräten vorhandenen Beleuchtungseinsätze oder Beleuchtungselemente sind so modifiziert, dass sie zusätzlich zu ihrer Beleuchtungsfunktion für die Datenübertragung, beispielsweise einer Identifizierungskennzeichnung des Installationsgerätes, einer Anzeige des Aktivierungszustandes und/oder einer Statusanzeige (z.B. einer Warnmeldung) des Installationsgerätes mittels der von den Beleuchtungselementen abgegebenen sichtbaren Lichtstrahlen, verwendbar sind.

Für die Datenübertragung können auch Beleuchtungselemente genutzt werden, deren Funktion lediglich in der Bereitstellung von Lichtstrahlen für die Datenübertragung beruht.

Auch kann an den Installationsgeräten eine Vorrichtung zum Anbringen von Beleuchtungselementen als Lichtquelle zur Datenübertragung mittels der von ihnen ausgesendeten Lichtstrahlen vorgesehen sein.

In einer bevorzugten Ausführungsform der Erfindung werden die Beleuchtungselemente, insbesondere an Bedieneinheiten von Sonnenschutzvorrichtungen, Türkommunikationsanlagen, Sicherheitsanlagen sowie Heizungs- und Klimaanlagen so modifiziert, dass mittels der von den Beleuchtungselementen abgegebenen sichtbare Lichtstrahlen beliebige digitale Daten, zu denen insbesondere gerätebezogene Daten zählen, von und zur Empfängereinheit des mobilen Gerätes und/oder über das mobile Gerät zur der zentralen Kommunikationseinheit übertragen. Zu den übertragenen Daten zählen neben den gerätebezogenen Daten, wie beispielsweise Geräteidentifikationsdaten, Diagnosedaten und/oder Konfigurierungsdaten der Installationsgeräte, Firmware-Updates, Positionsdaten des installierten Gerätes und/oder Daten sowie Details zur Fehlerbehebung, auch nicht gerätebezogene Daten, wie beispielsweise, Geräteumgebungsinformationen, Prozessdaten, Positions- oder Standortdaten.

Erfindungsgemäß sind die Empfängereinheit und die zentrale Kommunikationseinheit mit wenigstens einer Datenerfassungs- und Verarbeitungseinheit ausgestattet, mit welcher die von den als Sendeeinheiten wirkenden Lichtquellen der Installationsgeräte abgegebenen sichtbare Lichtstrahlen des Installationsgerätes empfangen und verarbeitet werden.

In einer Ausgestaltung der Erfindung sind das mobile Gerät und/oder die zentrale Kommunikationseinheit mit einer Internetschnittstelle ausgestattet, welche einen Datenaustausch mit einer Internetplattform oder Internetoberfläche ermöglicht.

In einer bevorzugten Ausführungsform der Erfindung ist als erweiterte Funktionalität auch eine bidirektionale Kommunikation mittels sichtbaren Lichtes zwischen dem Installationsgerät, der Empfängereinheit und/oder der Zentrale vorgesehen, beispielsweise für ein Firmware Update bzw. zum Empfang von Gerätedaten.

Dazu ist das Installationsgerät mit einer weiteren Empfängereinheit ausgerüstet, beispielsweise einer Fotodiodenanordnung oder Fotodetektoranordnung, welche als Detektor für sichtbares Licht arbeitet und das Lichtsignal in ein elektrisches Signal bzw. in entsprechende digitale Daten umwandelt und zur weiteren Verarbeitung bereitstellt.

Sind die Installationsgeräte mit RGB- LED's (farbigen LEDs in den Farben rot/ grün/ blau) ausgestattet, die insbesondere für die Anzeige des Gerätestatus Verwendung finden, sind diese erfindungsgemäß zusätzlich als VLC- Sendeeinheit unter Verwendung der unterschiedlichen Frequenzen des Lichtspektrums zur Datenübertragung bzw. zur Anzeige des Gerätestatus nutzbar. Dabei zeigt eine grün oder rot leuchtende LED den Gerätestatus des Installationsgerätes an und gleichzeitig überträgt diese LED digitale Daten, die den Gerätezustand betreffen mittels dem von der LED's ausgesendeten Licht auf der Basis der Visual Light Communication zur Empfängereinheit, beispielsweise einem Smartphone, einem Tablet PC oder einem Handheld- Gerät, welche die empfangenen Daten weiterverarbeiten.

Leuchtet die LED grün, wird die Statusinformation "Gerät arbeitet fehlerfrei" zum mobilen Gerät übertragen. Leuchtet die LED rot, wird die Statusinformation "Gerät hat einen Fehler" zum mobilen Gerät übertragen. Die Übertragung erfolgt dabei zusätzlich zur visuellen Anzeige am Gerät selbst, beispielsweise mittels eines digitalen Fehlercodes.

In einer weiteren Ausgestaltung der erfindungsgemäßen Anordnung kommunizieren wenigstens zwei der mit Beleuchtungselementen ausgestattete Installationsgeräte mit dem mobilen Gerät über dessen optischen Sende- und/oder Empfängereinheit, dergestalt, dass das als Sende- und/oder Empfangseinheit arbeitende Beleuchtungselement eines ersten Installationsgerätes Signale des als Sende- und/oder Empfangseinheit arbeitende Beleuchtungselement des jeweils benachbarten Installationsgerätes über die Empfängereinheit des mobilen Gerätes empfängt, auswertet und/oder verarbeitet und umgekehrt.

Die mit der Erfindung erzielbaren Vorteile liegen insbesondere darin, dass die Datenübertragung mittels der Strahlung von sichtbarem Licht eine sehr schnelle drahtlose optische Datenkommunikation ermöglicht und im Vergleich zu anderen drahtlosen Kommunikationstechnologien schon verfügbare Beleuchtungselemente der Installationsgeräte nutzen kann. Hier erweist es sich als besonders vorteilhaft, dass die hier beschriebene Kommunikation mittels sichtbarer Lichtstrahlen keine Interferenzen mit vorhandenen drahtlosen RF (Radio Frequency) -Netzwerken erzeugt. Auch bietet die optische Datenübertragung eine verbesserte Datensicherheit als herkömmliche abhörbare drahtlose Kommunikationsverbindungen, da sich die Lichtsignale immer nur innerhalb eines begrenzten Bereiches vorhanden sind.

Die erfindungsgemäße Anordnung findet weiterhin Anwendung in Bereichen, wo eine drahtlose Kommunikation mittels RF- Netzwerken zu gravierenden Störungen führen würde, wie z.B. in feuergefährlichen Bereichen von Gas- oder petrochemischen Anlagen, speziellen Gebäudeteilen in Krankenhäusern und in Flugzeugen.

Weitere Vorteile gegeben sich daraus, dass das sichtbare Lichtspektrum 10000-mal größer ist als das Funkspektrum und damit eine große Bandbreite bei der Datenübertragung zur Verfügung steht. Weiterhin steht die vorab beschriebene drahtlose optische Datenübertragung vollkommen lizenzfrei und providerfrei zur Verfügung.

Ein weiterer Vorteil der Datenübertragung mittels der von den Beleuchtungselementen ausgesendeten Lichtstrahlen beruht darauf, dass die Lichtstrahlen im sichtbaren Bereich unbedenklich für die Gesundheit sind und das sichtbares Licht bekanntermaßen keine schädlichen Einflüsse auf die Umwelt hat.

Darüber hinaus können viele andere standortbezogene Serviceleistungen in Ergänzung der erfindungsgemäßen Anordnung zur drahtlosen Datenübertragung mittels der sichtbaren Lichtstrahlen in einem Haus- oder Gebäudeinstallationssystem einbezogen werden, wie eine Innenraum-Navigation, beispielsweise mittels des aus dem Stand der Technik bekannten WLAN- basiertem Ortungssystem RSS (Received-Signal-Strength) Fingerprinting.

Dem installierten Gerät ist eine Identifikationsnummer zugeordnet, welche mittels der sichtbaren Lichtstellen zum mobilen Gerät, z.B. dem Smartphone, übertragen wird. Das mobile Gerät empfängt diese Identifikationsnummer und gleicht sie mit der in der Backend- Datenbank abgelegten Identifikationsnummer ab. Vorzugsweise sind in dieser Datenbank die Geräten-Identifikationsnummern der Geräte des Haus- oder Gebäudeinstallationssystems mit entsprechenden festen Standort- bzw. Positionsdaten verbunden, so dass der Standort des jeweiligen Gerätes über seine Identifikationsnummer bestimmbar ist. Weiterhin lässt sich damit auch der Standort des mobilen Gerätes bestimmen, das sich dieses in Reichweite der von der Lichtquelle des Installationsgerätes abgegebenen Lichtstrahlen befinden muss.

Alternativ kann auch vorgesehen sein, dass mittels der von der Lichtquelle des Installationsgerätes abgegebenen Lichtstrahlen statt einer Identifikationsnummer Standortdaten des Gerätes zum mobilen Gerät übertragen werden, so dass die Notwendigkeit einer zusätzlichen Backend- Datenbank in einer zentralen Kommunikationseinheit nicht mehr zwingend erforderlich ist.

Ein weiteres Beispiel wären Geräteumgebungsanwendungen für das Servicepersonal, das die Information aus der Datenbank oder Cloud in Form einer Liste der installierten Geräte erhält, welche sich z.B. im gleichen Raum befinden wie das zu prüfende oder zu reparierende Gerät.

Die digitalen Daten, welche mittels der optischen Signale der Lichtquellen vom oder zum Gerät übertragen werden, können lokal im Gerät in einem integriertem Speicher untergebracht werden oder entfernt in einem System bzw. einer Datenbank oder Cloud gespeichert sein.

Dazu sind die Gebäudeautomatisierungsgeräte mit einem Speicher ausgestattet, um ihre Informationen zu sichern oder die Geräte können anstelle der individuellen Identifizierungsnummer (ID) oder zusätzlich zu dieser ID die Standort- oder Umgebungsinformation senden, die sie verfügbar haben.

Anhand von den in den folgenden Figuren dargestellten Ausführungsbeispielen sollen die Erfindung sowie vorteilhafte Ausgestaltungen, Verbesserungen und weitere Vorteile der Erfindung näher erläutert und beschrieben werden.

Es zeigen:
- **Fig.** 1: eine beispielhafte Ausführungsform der erfindungsgemäßen Anordnung zur drahtlosen Datenübertragung in einem Haus- oder Gebäudeinstallationssystem mit wenigstens einem als Unterputzgerät ausgeführtem Installationsgerät, und
- **Fig.** 2: eine weitere beispielhafte Ausführungsform der erfindungsgemäßen Anordnung zur drahtlosen Datenübertragung basierend auf einer drahtlosen Kommunikation mittels sichtbaren Lichts zwischen den Installationsgeräten des Haus- oder Gebäudeinstallationssystem und einer zentralen Kommunikationseinheit.

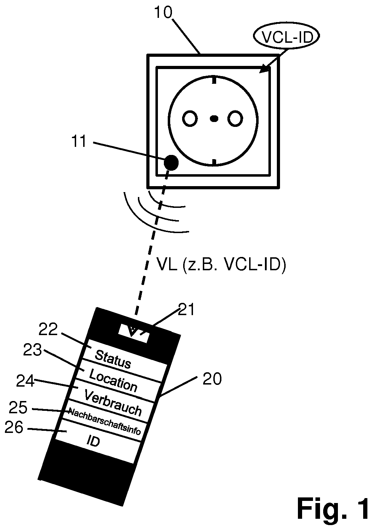

**Fig.** 1 zeigt eine beispielhafte Ausführungsform der erfindungsgemäßen Anordnung zur drahtlosen Datenübertragung in einem Haus- oder Gebäudeinstallationssystem mit wenigstens einem als Unterputzgerät 10 ausgeführtem Installationsgerät Gebäudeautomatisierungsgerät, nachfolgend auch als Installationsgerät, bezeichnet. Das Installationsgerät 10 ist mit einer als LED ausgeführten Lichtquelle 11 ausgestattet. Die Lichtquelle ist so modifiziert, dass die LED 11 für eine Datenübertragung mittels den von der LED 11 abgegebenen Lichtstrahlen VL zu einer entfernten Empfängereinheit 21 geeignet ist, die beispielsweise in einem Handheld- Gerät, einem Tablet-PC, einem Smartphone, einer Fernbedienung oder ähnlichen Geräten, nachfolgend als mobiles Gerät 20 bezeichnet, integriert ist.

Gemäß der Ausführung der erfindungsgemäßen Anordnung ist eine Vielzahl weiterer hier nicht dargestellter Installationsgeräte bzw. Gebäudeautomatisierungsgeräte 10 mit umfasst, welche ebenfalls zur optischen Datenübertragung eingerichtet sind.

Als Installationsgerät 10 ist beispielhaft eine Steckdose mit der als optische Sendeeinheit wirkende LED 11 vorgesehen. Das mobile Gerät 20 ist mit der Empfängereinheit 21 zum Empfang der von der LED 11 ausgesendeten Lichtstrahlen VL ausgestattet.

Die optischen Sende- und/oder Empfangseinheiten 11, 21 der erfindungsgemäßen Anordnung sind so angeordnet, dass sie einen Datenaustausch zwischen den Sende- und/oder Empfangseinheiten 11, 21 ermöglichen.

Die Empfängereinheit 21 ist mit einer Datenerfassungs- und/oder Verarbeitungseinheit und mit einer Lichtdetektoreinheit, beispielsweise einem Lichtsensor, einer Fotodiodenanordnung, einer Fotodetektoranordnung oder einer Kamera zur Bildverarbeitung ausgestattet. Mit der Empfängereinheit 21 werden die von der als Sendeeinheit wirkenden LED 11 abgegebenen oder ausgesendeten sichtbare Lichtstrahlen VL empfangen und/oder verarbeitet, indem die empfangenen Lichtstrahlen VL wieder in Stromimpulse entsprechend der übertragenen Daten umwandelt und die erhaltene Information visualisiert werden.

Dazu verfügt das mobile Gerät 20 über ein User Interface, welches dem Nutzer ermöglicht, bestimmte Informationen, wie Statusanzeigen 22, Verbrauchsinformationen 24, Standortdaten 23 des Gebäudeautomatisierungsgerätes 10, von einem Backend-System, abzurufen, beispielsweise mittels LTE, Wi-Fi, Bluetooth.

Die Steckdose 10, welche mittels der integrierten LED 11 einen Status der Steckdose 10, z.B. "Steckdose eingeschaltet", am Gerät 10 anzeigt, ist erfindungsgemäß dafür vorgesehen, diese Statusinformation mittels der von der LED 11 ausgesendeten Lichtstrahlen VL auf das mobile Gerät 20 zu übertragen und auf dem Display des mobilen Gerätes 20 als Statusanzeige 22 darzustellen. Zusätzlich sind auch eine individuelle Identifizierungsnummer oder Identifikationskennzeichnung VCL-ID der Steckdose 10 und/oder der Stromverbrauch der Steckdose 10 parallel zur Statusanzeige 22 zur Empfängereinheit 21 des mobilen Gerätes 20 übertragbar und auf dem Display als Identifikationsanzeige 26 und/oder Verbrauchsanzeige 24 darstellbar.

Ist die Steckdose 10 zusätzlich mit einem als Empfänger für von der Empfängereinheit 21 des mobilen Gerätes 20 gesendeten Lichtstrahlen VL ausgestattet, ist auch ein bidirektionaler Datenaustausch zwischen dem mobilen Gerät 20 und der Steckdose 10 mittels der sichtbaren Lichtstrahlen VL ausführbar, wodurch beispielsweise eine Konfigurierung der Steckdose 10 ausführbar ist.

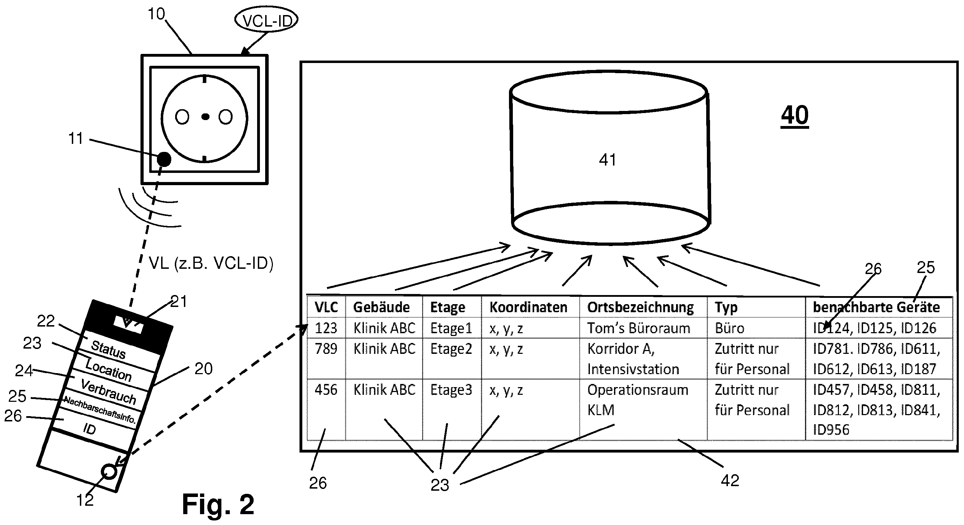

**Fig.** 2 zeigt eine weitere beispielhafte Ausführungsform der erfindungsgemäßen Anordnung zur drahtlosen Datenübertragung basierend auf einer drahtlosen Kommunikation mittels sichtbarer Lichtstrahlen VL zwischen den als LED's ausgeführten Lichtquellen 11 der Installationsgeräte 10 des Haus- oder Gebäudeinstallationssystems und einer zentralen Kommunikationseinheit 40 über das mobile Gerät 20. Die zentrale Kommunikationseinheit 40 ist mit einer Datenerfassungs- und Verarbeitungseinheit mit integrierter Backend- Datenbank 41 und das mobile Gerät 20 mit einer weiteren Sende- und/oder Empfangseinheit 12 ausgestattet, die mit der zentralen Kommunikationseinheit 40 Daten austauscht. Die Datenerfassungs- und Verarbeitungseinheit 41 empfängt und verarbeitet die über das mobile Gerät 20 empfangenen und weiter als digitale Daten übertragenen Informationen der Installationsgeräte 10.

Vorzugsweise erfolgt die Informationsübertragung zwischen der Datenerfassungs- und Verarbeitungseinheit 41 des Backend- Systems 40 und dem mobilen Gerät 20 mittels der bekannten Übertragungsverfahren, wie beispielsweise LTE, Wi-Fi oder Bluetooth auch bidirektional zur Aktualisierung für die im mobilen Gerät 20 und/oder im Installationsgerät 10 abgelegte Firmware. Dazu ist auch die zentrale Kommunikationseinheit 40 mit einer entsprechenden Empfangs- und Sendeeinheit zur Datenübertragung mit dem mobilen Gerät 20 ausgestattet.

Erfindungsgemäß ist vorgesehen, dass die Lichtquellen 11 der Geräte 10 des Haus- oder Gebäudeautomatisierungssystems die ihnen jeweils zugeordnete eindeutige Identifikationskennzeichnung VLC-ID mittels der sichtbaren Lichtstrahlen VL über das mobile Gerät 20 senden und vom mobilen Gerät 20 diese Identifikationskennzeichnung VLC-ID der zentralen Kommunikationseinheit 40 zur weiteren Verarbeitung übermittelt wird.

Die die zentrale Kommunikationseinheit 40 kann vorteilhafter Weise mit einer Internetplattform bzw. einer Cloud verbunden sein, über welche auch Firmware- Aktualisierungen durchführbar sind.

Die in der zentrale Kommunikationseinheit 40 vorgesehene Datenerfassungs- und Verarbeitungseinheit mit ihrer integrierten lokalen Backend- Datenbank 41 stellt Informationstabellen 42 zur Verfügung, von denen eine Ausführungsform beispielhaft in der Fig. 2 gezeigt ist.

In einer vorteilhaften Ausführungsvariante kann die Backend- Datenbank 41 auch in der Cloud abgelegt sein, mit welcher das mobile Gerät 20 kommuniziert.

Vorzugsweise ist die Lichtquelle der Steckdose 10 als RGB- LED 11 ausgeführt, welche für ein sehr schnelles An- und Ausschalten geeignet ist und dadurch Datensignale mittels der sichtbaren Lichtstrahlen VL zum mobilen Gerät 20 übertragbar sind.

Da das Schalten der RGB- LED sehr schnell erfolgt und für das menschliche Auge nicht wahrnehmbar ist, wird lediglich eine grün leuchtende LED 11 erkannt, die dem Status "Gerät funktioniert fehlerfrei" entspricht. Gleichzeitig werden jedoch digitale Daten mittels der sichtbaren Lichtstrahlen VL, wie Daten zur Geräteidentifikation, Daten zum Energieverbrauch eines an die Steckdose 10 angeschlossenen Verbrauchers und/oder Daten zum Installationsstandort der Steckdose 10 usw., übertragen.

Die von der Steckdose 10 mittels der sichtbaren Lichtstrahlen VL übertragenen Information, wie die Identifikationskennzeichnung ID der Steckdose 10 kann in vorteilhafter Weise mit Informationen, die sich im Backend- System 40 bzw. der Cloud befinden und dort vorzugsweise in Tabellenform 42 abgelegt sind, verknüpft werden.

In der Informationstabelle 42 werden die Identifikationskennzeichnungen VLC-ID der Gebäudeautomatisierungsgeräte 10 als Key Identifier (primäres Identifikationsmerkmal) benutzt, denen kartographische Informationen wie Standortdaten 23, Nachbarschafts-/Umgebungsinformation 25 der benachbarten Geräte, usw. zugeordnet sind.

Das mobile Gerät 20 ist in der hier gezeigten Ausführungsform der Erfindung mit einer Anwendung ausgestattet, welche die erhaltene Information visualisieren kann und verfügt über ein User Interface, das es dem Nutzer ermöglicht, bestimmte Informationen abzurufen, z.B. von den Backend-Systemen 40 oder der Cloud. Beispielsweise kann die Information aus Standortdaten 23 bestehen, die ihrerseits Koordinationsdaten enthalten können, wie "Tom's Büro" und (optional) weitere anwendungsbezogene Informationen, wie "gefährliche Zone", "keine Fußgängerzone". Dazu kann eine auf dem mobilen User- Gerät 20 befindliche Anwendung Standortinformationen, wie "du befindest Dich genau hier", anzeigen.

Sind die Geräteinformation, wie Standortdaten 23, Umgebungsdaten 25 usw. in einem lokalem Speicher am Installationsgerät 10 oder im mobilen Gerät 20 gespeichert, sind ein Backend- System oder eine Cloud 40 nicht mehr erforderlich. Diese Ausführungsform zeigt Fig. 1.

Optional können die Geräteinformationen 23, 25 auch von einem mit dem Installationsgerät 10 verbundene Netzwerk bereitgestellt werden, beispielsweise über ein KNX- oder ein Power Line Communication (PLC)- Netzwerk. Gemäß dieser Ausgestaltung können alle über das mit dem Installationsgerät 10 verbundene Netzwerk bereitgestellten dynamischen Daten, über die Datenübertragung mittels der sichtbaren Lichtstrahlen VL an das mobile Gerät 20 übertragen werden.

### Bezugszeichenliste

- 10: Installationsgerät, Gebäudeautomatisierungsgerät, Steckdose
- 11: Lichtquelle, Beleuchtungselement, LED, RGB-LED, optische Sendeeinheit
- 12: weitere Sende- und/oder Empfangseinheit des mobilen Gerätes
- 20: mobiles Gerät, Handheld- Gerät, Tablet-PC, Smartphone, User-Gerät
- 21: optische Empfängereinheit, Fotodiodenanordnung, Fotodetektoranordnung
- 22: Statusanzeige
- 23: Standortdaten
- 24: Verbrauch
- 25: Nachbarschafts- / Umgebungsinformation der benachbarte Geräte
- 26: Identifikationsanzeige
- 40: zentrale Kommunikationseinheit, zentrale Verarbeitungseinheit, Zentraleinheit, Backend- System
- 41: in der Datenerfassungs- und Verarbeitungseinheit integrierte Datenbank, Backend- Datenbank
- 42: Informationstabelle
- VL: sichtbare Lichtstrahlen (VL = Visible Light), Datenaustausch mittel sichtbarer Strahlen, Geräteidentifikationsdaten, Diagnosedaten, Konfigurierungsdaten der Installationsgeräte, Firmware-Updates, Positionsdaten des installierten Gerätes, Daten sowie Details zur Fehlerbehebung, Geräteumgebungsinformationen, Prozessdaten, Positions- oder Standortdaten
- VCL-ID: individuelle Identifizierungsnummer, Identifikationskennzeichnung eines Gebäudeautomatisierungsgerätes

## Patentansprüche

1. Anordnung zur Datenübertragung in einem Haus- oder Gebäudeinstallationssystem mit wenigstens einem als Unterputz- oder Aufputzgerät ausgeführtem Installationsgerät (10), das als Steckdose, Schalter, Taster, Dimmer, Rauchmelder, Bewegungsmelder, Gebäudeautomatisierungsgerät mit Bedieneinheiten für Sonnenschutzvorrichtungen, Türkommunikationsanlagen, Sicherheitsanlagen sowie Heizungs- und Klimaanlagen ausgeführt ist, wobei das wenigstens eine Installationsgerät (10) mit wenigstens einer als optische Sendeeinheit wirkenden Lichtquelle (11) ausgestattet ist, die mit wenigstens einer im Abstand zur Sendeeinheit (11) des Installationsgerätes (10) angeordneten in einem mobilen Gerät (20) integrierten optischen Empfängereinheit (21) mittels den von der Sendeeinheit (11) ausgesendeten Lichtstrahlen (VL) drahtlos kommuniziert, wobei die Lichtquelle (11) so modifiziert ist, dass eine Datenübertragung über die von der Lichtquelle (11) des Installationsgerätes (10) abgegebenen sichtbare Lichtstrahlen (VL) ausführbar ist, **dadurch gekennzeichnet, dass** die Datenübertragung eine Identifizierungskennzeichnung des Gerätes (10), eine Anzeige des Aktivierungszustandes und eine Statusanzeige (22) umfasst und das als Sende- und/oder Empfangseinheit arbeitende Beleuchtungselement (11) eines Installationsgerätes (10) Signale des als Sende- und/oder Empfangseinheit arbeitende Beleuchtungselement (11) eines jeweils benachbarten Installationsgerätes über die Empfängereinheit (21) des mobilen Gerätes (20) empfängt, auswertet und/oder verarbeitet und umgekehrt.

2. Anordnung nach Anspruch 1, **dadurch gekennzeichnet, dass** die wenigstens eine Sendeeinheit (11) des Installationsgerätes (10) als LED ausgeführt ist, und die wenigstens eine Empfängereinheit (21) mit einer Datenerfassungs- und Verarbeitungseinheit zusammenwirkt, welche die von der als Sendeeinheit (11) wirkenden LED abgegebenen sichtbare Lichtstrahlen (VL) zur drahtlosen optischen Datenübertragung empfängt, verarbeitet und/oder anzeigt.

3. Anordnung nach Anspruch 2, **dadurch gekennzeichnet, dass** die optische Empfängereinheit (21) und die Datenerfassungs- und Verarbeitungseinheit in einer Fernbedienung, einem Smartphone, einem Tablet PC oder einem Handheld- Gerät (20) integriert sind und die Datenerfassungs- und Verarbeitungseinheit die empfangenen Daten zu einer entfernten zentralen Kommunikationseinheit (40) weiterleitet.

4. Anordnung nach einem der vorstehenden Ansprüche, **dadurch gekennzeichnet, dass** die Empfängereinheit (21) als ein VLC Receiver, Fotodiodenanordnung, Fotodetektoranordnung oder Kamera mit integrierter Bildverarbeitung ausgeführt ist.

5. Anordnung nach einem der vorstehenden Ansprüche, **dadurch gekennzeichnet, dass** die Datenübertragung mittels der sichtbaren Lichtstrahlen (VL) als Lichtquelle bereits am Gerät (10) vorhandene Beleuchtungselemente (11) verwendet, welche so modifiziert sind, dass sie zusätzlich zu ihrer Beleuchtungsfunktion für die Datenübertragung, beispielsweise einer Identifizierungskennzeichnung des Gerätes (10), einer Anzeige des Aktivierungszustandes und/oder Statusanzeige (22) mittels der von den Beleuchtungselementen abgegebenen sichtbaren Lichtstrahlen (VL), verwendbar sind.

6. Anordnung nach einem der Ansprüche 1 bis 4, **dadurch gekennzeichnet, dass** die Datenübertragung mittels der sichtbaren Lichtstrahlen (VL) als Lichtquelle Beleuchtungselemente (11) nutzt, deren Funktion lediglich in der Bereitstellung von Lichtstrahlen (VL) für die Datenübertragung beruht, wobei die Beleuchtungselemente so modifiziert sind, dass sie für die optische Datenübertragung, beispielsweise einer Identifizierungskennzeichnung des Gerätes (10), einer Anzeige des Aktivierungszustandes und/oder Statusanzeige (22) des Gerätes (10) mittels der von den Beleuchtungselementen abgegebenen sichtbaren Lichtstrahlen (VL), verwendbar sind.

7. Anordnung nach einem der vorstehenden Ansprüche, **dadurch gekennzeichnet, dass** die Datenübertragung mittels der sichtbaren Lichtstrahlen (VL) digitale Daten, wie Geräteidentifikationsdaten, Diagnosedaten, Verbrauchsdaten am Gerät (10) Konfigurierungsdaten der Installationsgeräte, Firmware-Updates, Geräteumgebungsinformationen, Prozessdaten, Positionsdaten und/oder Daten sowie Details zur Fehlerbehebung umfasst.

8. Anordnung nach einem der Ansprüche 5 bis 7, **dadurch gekennzeichnet, dass** das Installationsgerät (10) mit einer weiteren Empfängereinheit (21) zum Empfang sichtbarer Lichtstrahlen (VL) ausgestattet ist, welche als Detektor für sichtbares Licht arbeitet und so eine bidirektionale Kommunikation mittels sichtbaren Lichtes zwischen dem Gerät (10), der Empfängereinheit (21) und/oder der zentralen Kommunikationseinheit (40), beispielsweise für ein Firmware Update, ermöglicht.

9. Anordnung nach einem der vorstehenden Ansprüche, **dadurch gekennzeichnet, dass** an den Geräten (10) eine Vorrichtung zum Anbringen von als Lichtquelle wirkenden Beleuchtungselementen (11) zur Datenübertragung mittels der von ihnen ausgesendeten Lichtstrahlen (VL) vorgesehen ist.

10. Anordnung nach einem der Ansprüche 2 bis 9, **dadurch gekennzeichnet, dass** das Gerät (10) mit wenigstens einer RGB- LED (11) ausgestattet ist, wodurch die unterschiedliche Frequenzen des Lichtspektrums zur Datenübertragung nutzbar sind.

11. Anordnung nach einem der Ansprüche 5 bis 10, **dadurch gekennzeichnet, dass** das mobile Gerät (20) und/oder die zentrale Kommunikationseinheit (40) mit einer Internetschnittstelle ausgestattet ist, welche einen Datenaustauch mit einer Internetplattform oder Internetoberfläche ermöglicht.

## Claims

1. Arrangement for transmitting data in a home or building installation system having at least one installation device (10) which is in the form of a flush-mounted or surface-mounted device and is in the form of a socket, a switch, a pushbutton, a dimmer, a smoke detector, a motion detector, a building automation device with operating units for sun protection apparatuses, door communication systems, security systems and heating and air-conditioning systems, wherein the at least one installation device (10) is equipped with at least one light source (11) which acts as an optical transmission unit and wirelessly communicates with at least one receiver unit (21) arranged at a distance from the transmission unit (11) of the installation device (10) and integrated in a mobile device (20) by means of the light beams (VL) emitted by the transmission unit (11), wherein the light source (11) is modified in such a manner that data can be transmitted using the visible light beams (VL) emitted by the light source (11) of the installation device (10), **characterized in that** the data transmission comprises an identification marker of the device (10), an indication of the activation state and a status display (22), and the lighting element (11) of an installation device (10), which operates as a transmission and/or reception unit, receives, evaluates and/or processes signals from the lighting element (11) of a respectively adjacent installation device, which operates as a transmission and/or reception unit, via the receiver unit (21) of the mobile device (20) and vice versa.

2. Arrangement according to Claim 1, **characterized in that** the at least one transmission unit (11) of the installation device (10) is in the form of an LED, and the at least one receiver unit (21) interacts with a data capture and processing unit which receives, processes and/or displays the visible light beams (VL) emitted by the LED acting as the transmission unit (11) for wireless optical data transmission.

3. Arrangement according to Claim 2, **characterized in that** the optical receiver unit (21) and the data capture and processing unit are integrated in a remote control, a smartphone, a tablet PC or a handheld device (20), and the data capture and processing unit forwards the received data to a remote central communication unit (40).

4. Arrangement according to one of the preceding claims, **characterized in that** the receiver unit (21) is in the form of a VLC receiver, a photodiode arrangement, a photodetector arrangement or a camera with integrated image processing.

5. Arrangement according to one of the preceding claims, **characterized in that** the data transmission by means of the visible light beams (VL) uses lighting elements (11) which are already present on the device (10) as the light source, which lighting elements are modified in such a manner that, in addition to their lighting function, they can be used to transmit data, for example an identification marker of the device (10), an indication of the activation state and/or a status display (22), by means of the visible light beams (VL) emitted by the lighting elements.

6. Arrangement according to one of Claims 1 to 4, **characterized in that** the data transmission by means of the visible light beams (VL) uses lighting elements (11), the function of which is based only on the provision of light beams (VL) for the data transmission, as the light source, wherein the lighting elements are modified in such a manner that they can be used to optically transmit data, for example an identification marker of the device (10), an indication of the activation state and/or a status display (22) of the device (10), by means of the visible light beams (VL) emitted by the lighting elements.

7. Arrangement according to one of the preceding claims, **characterized in that** the data transmission by means of the visible light beams (VL) comprises digital data such as device identification data, diagnostic data, consumption data on the device (10), configuration data relating to the installation devices, firmware updates, device environment information, process data, position data and/or data and details for error correction.

8. Arrangement according to one of Claims 5 to 7, **characterized in that** the installation device (10) is equipped with a further receiver unit (21) for receiving visible light beams (VL), which receiver unit operates as a detector for visible light and thus enables bidirectional communication by means of visible light between the device (10), the receiver unit (21) and/or the central communication unit (40), for example for a firmware update.

9. Arrangement according to one of the preceding claims, **characterized in that** an apparatus for fitting lighting elements (11) acting as a light source for transmitting data by means of the light beams (VL) emitted by said lighting elements is provided on the devices (10).

10. Arrangement according to one of Claims 2 to 9, **characterized in that** the device (10) is equipped with at least one RGB LED (11), as a result of which the different frequencies of the light spectrum can be used to transmit data.

11. Arrangement according to one of Claims 5 to 10, **characterized in that** the mobile device (20) and/or the central communication unit (40) is/are equipped with an Internet interface which makes it possible to interchange data with an Internet platform or an Internet interface.

## Revendications

1. Système de transmission de données dans un système d'installation de maison ou de bâtiment avec au moins un appareil d'installation encastré ou apparent (10), qui est réalisé sous forme de prise de courant, interrupteur, bouton-poussoir, gradateur, détecteur de fumée, détecteur de mouvement, appareil d'automatisation de bâtiment avec des unités de commande pour des dispositifs de protection solaire, installations de parlophone, installations de sécurité ainsi qu'installations de chauffage et de climatisation, dans lequel ledit au moins un appareil d'installation (10) est équipé d'au moins une source de lumière (11) opérant comme unité d'émission optique, qui communique sans fil avec au moins une unité de récepteur optique (21) disposée à distance de l'unité d'émission (11) de l'appareil d'installation (10) et intégrée dans un appareil mobile (20) au moyen des rayons lumineux (VL) émis par l'unité d'émission (11), dans lequel la source de lumière (11) est modifiée de telle manière qu'une transmission de données puisse être effectuée par les rayons lumineux visibles (VL) émis par la source de lumière (11) de l'appareil d'installation (10), **caractérisé en ce que** la transmission de données comprend une caractéristique d'identification de l'appareil (10), un affichage de l'état d'activation et un affichage de statut (22) et l'élément d'éclairage (11) d'un appareil d'installation (10) opérant comme unité d'émission et/ou de réception reçoit, analyse et/ou traite des signaux de l'élément d'éclairage (11) opérant comme unité d'émission et/ou de réception d'un appareil d'installation respectivement voisin par l'intermédiaire de l'unité de réception (21) de l'appareil mobile (20) et inversement.

2. Système selon la revendication 1, **caractérisé en ce que** ladite au moins une unité d'émission (11) de l'appareil d'installation (10) est formée par une DEL, et ladite au moins une unité de réception (21) coopère avec une unité de saisie et de traitement de données, qui reçoit, traite et/ou affiche les rayons lumineux visibles (VL) émis par la DEL opérant comme unité d'émission (11) pour la transmission de données optique sans fil.

3. Système selon la revendication 2, **caractérisé en ce que** l'unité de réception optique (21) et l'unité de saisie et de traitement de données sont intégrées dans une télécommande, un smartphone, une tablette PC ou un appareil portable (20) et l'unité de saisie et de traitement de données retransmet les données reçues à une unité de communication centrale distante (40).

4. Système selon l'une quelconque des revendications précédentes, **caractérisé en ce que** l'unité de réception (21) est formée par un récepteur VLC, un agencement de photodiode, un agencement de photodétecteur ou une caméra avec traitement d'image intégré.

5. Système selon l'une quelconque des revendications précédentes, **caractérisé en ce que** la transmission de données au moyen des rayons lumineux visibles (VL) utilise comme source de lumière des éléments d'éclairage (11) déjà présents dans l'appareil (10), qui sont modifiés de telle manière que, en plus de leur fonction d'éclairage, ils puissent être utilisés pour la transmission de données, par exemple d'une caractéristique d'identification de l'appareil (10), d'un affichage de l'état d'activation et/ou d'un affichage de statut (22) au moyen des rayons lumineux visibles (VL) émis par les éléments d'éclairage.

6. Système selon l'une quelconque des revendications 1 à 4, **caractérisé en ce que** la transmission de données au moyen des rayons lumineux visibles (VL) utilise comme source de lumière des éléments d'éclairage (11), dont la fonction réside uniquement dans la fourniture de rayons lumineux (VL) pour la transmission de données, dans lequel les éléments d'éclairage sont modifiés de telle manière qu'ils puissent être utilisés pour la transmission de données optique, par exemple d'une caractéristique d'identification de l'appareil (10), d'un affichage de l'état d'activation et/ou d'un affichage de statut (22) de l'appareil (10) au moyen des rayons lumineux visibles (VL) émis par les éléments d'éclairage.

7. Système selon l'une quelconque des revendications précédentes, **caractérisé en ce que** la transmission de données au moyen des rayons lumineux visibles (VL) comprend des données numériques, comme des données d'identification d'appareil, des données de diagnostic, des données de consommation de l'appareil (10), des données de configuration des appareils d'installation, des mises à jour de fournisseur, des informations relatives à l'environnement de l'appareil, des données de traitement, des données de position et/ou des données ainsi que des détails pour l'élimination de défauts.

8. Système selon l'une quelconque des revendications 5 à 7, **caractérisé en ce que** l'appareil d'installation (10) est équipé d'une autre unité de réception (21) destinée à recevoir des rayons lumineux visibles (VL), qui opère comme détecteur de lumière visible et permet ainsi une communication bidirectionnelle au moyen de lumière visible entre l'appareil (10), l'unité de réception (21) et/ou l'unité de communication centrale (40), par exemple pour une mise à jour de fournisseur.

9. Système selon l'une quelconque des revendications précédentes, **caractérisé en ce qu'**il est prévu sur les appareils (10) un dispositif pour placer des éléments d'éclairage (11) agissant comme source de lumière pour la transmission de données au moyen des rayons lumineux (VL) émis par ceux-ci.

10. Système selon l'une quelconque des revendications 2 à 9, **caractérisé en ce que** l'appareil (10) est équipé d'au moins une DEL RGB (11), par laquelle les différentes fréquences du spectre lumineux peuvent être utilisées pour la transmission de données.

11. Système selon l'une quelconque des revendications 5 à 10, **caractérisé en ce que** l'appareil mobile (20) et/ou l'unité de communication centrale (40) est équipé(e) d'une interface Internet, qui permet un échange de données avec une plate-forme Internet ou une surface Internet.
